# EUROPEAN PATENT APPLICATION

(11) **EP 4 000 851 A1**
(43) Date of publication of application: **25.05.2022**
(21) Application number: 20948895.6
(22) Date of filing: 28.08.2020
(51) Int. Cl.: B29C 35/02, B29C 43/36, B29C 70/40

(54) **COMPOSITE MATERIAL MOLDING APPARATUS AND COMPOSITE MATERIAL MOLDING METHOD**

(71) Applicant: MITSUBISHI HEAVY INDUSTRIES, LTD., Chiyoda-ku, Tokyo 100-8332 (JP)
(72) Inventor: MORIYA, Makoto, Tokyo 1008332 (JP); UCHIDA, Koki, Tokyo 1008332 (JP); KANI, Yuki, Tokyo 1008332 (JP)
(74) Representative: Hoffmann Eitle
(86) International application number: PCT/JP2020/032605
(87) International publication number: WO 2022/044258

(57) **Abstract**

Provided is a composite material molding apparatus (1) that can evenly heat a molding surface of a metal mold and shorten the cycle time. The composite material molding apparatus (1) includes an upper die (3) and a lower die (5) having molding surfaces (3a, 5a) that accommodate a composite material member (W) and shape the composite material member (W). The upper die (3) and the lower die (5) each have a planar graphite heater (10) provided along installation positions so as to have a constant distance from the molding surface (3a, 5a) in a manner corresponding to the shape of the molding surface (3a, 5a).

## Description

### [Technical Field]

The present disclosure relates to a composite material molding apparatus and a composite material molding method for molding a composite material member including fibers and resin.

### [Background Art]

Composite material members are used as a structure member of an aircraft or the like. The composite material member includes fibers and a resin and is shaped into a desired shape by the composite material molding apparatus that applies a pressure and heat to obtain a molding.

PTL 1 discloses a press apparatus that compresses a molding material including reinforced fibers and a thermoplastic resin between an upper die and a lower die. Channels for temperature adjusting media are provided near a cavity surface inside the lower die and the upper die. A heating medium and a cooling medium are caused to flow in the channels for the temperature adjusting media.

### [Citation List]

### [Patent Literature]

[PTL 1]
Japanese Patent No. 6578030

### [Summary of Invention]

### [Technical Problem]

The press apparatus of PTL 1 heats the upper die and the lower die by using the channels for the temperature adjusting medium as a heat source. However, since the channels for the temperature adjusting medium serving as a heat source are arranged in a separate manner, it is not possible to evenly heat the molding surface.

Further, at a position distant from the channel for a temperature adjusting fluid serving as a heat source, the cycle time is longer because of reduced response of the temperature of the molding surface at the position.

The present disclosure has been made in view of the above problems and intends to provide a composite material molding apparatus and a composite material molding method that can evenly heat a molding surface of a metal mold and shorten the cycle time.

### [Solution to Problem]

A composite material molding apparatus according to one aspect of the present disclosure includes a metal mold having a molding surface configured to accommodate a composite material member and shape the composite material member, and the metal mold has a planar sheet heater provided along installation positions so as to have a constant distance from the molding surface in a manner corresponding to a shape of the molding surface.

A composite material molding method according to one aspect of the present disclosure is a composite material molding method using a composite material molding apparatus including a metal mold having a molding surface configured to accommodate a composite material member and shape the composite material member, and the metal mold has a planar sheet heater provided along installation positions so as to have a constant distance from the molding surface in a manner corresponding to a shape of the molding surface. The composite material molding method includes: installing the composite material member to be in contact with the molding surface; and pressurizing the composite material member by the metal mold and heating the composite material member by the sheet heater.

### [Advantageous Effects of Invention]

The molding surface of a metal mold can be evenly heated to shorten the cycle time.

### [Brief Description of Drawings]

[Fig. 1]

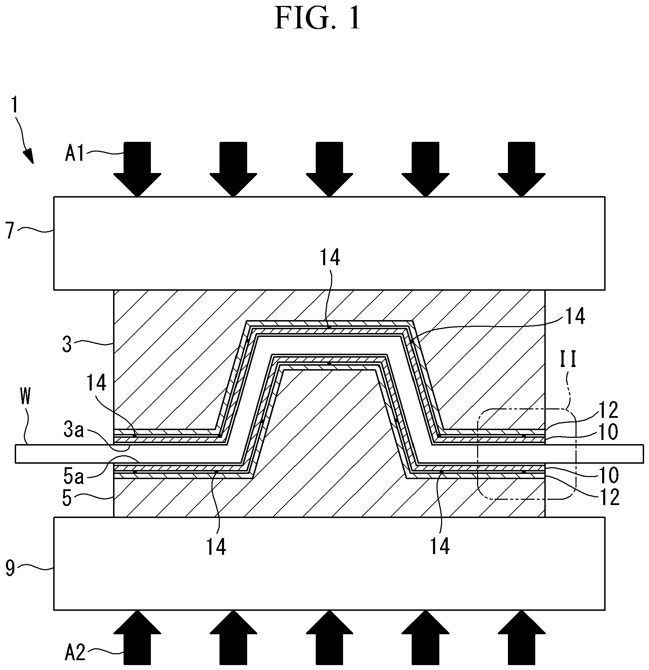

   Fig. 1 is a longitudinal sectional view illustrating a main part of a composite material molding apparatus according to one embodiment of the present disclosure.
[Fig. 2]

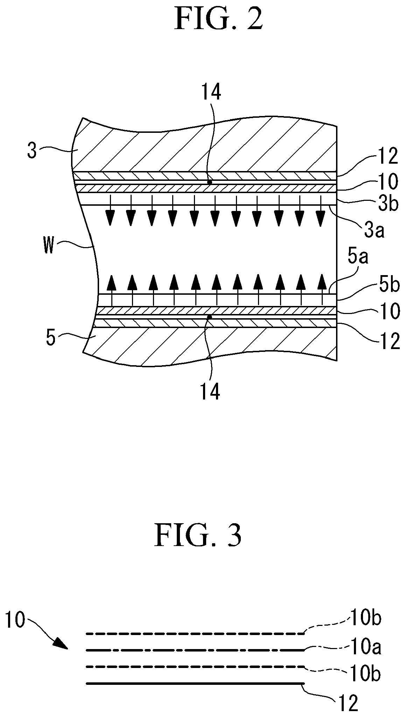

   Fig. 2 is a partial enlarged view of the part II of Fig. 1.
[Fig. 3]
   Fig. 3 is a longitudinal sectional view illustrating a layer configuration of a graphite heater.
[Fig. 4]

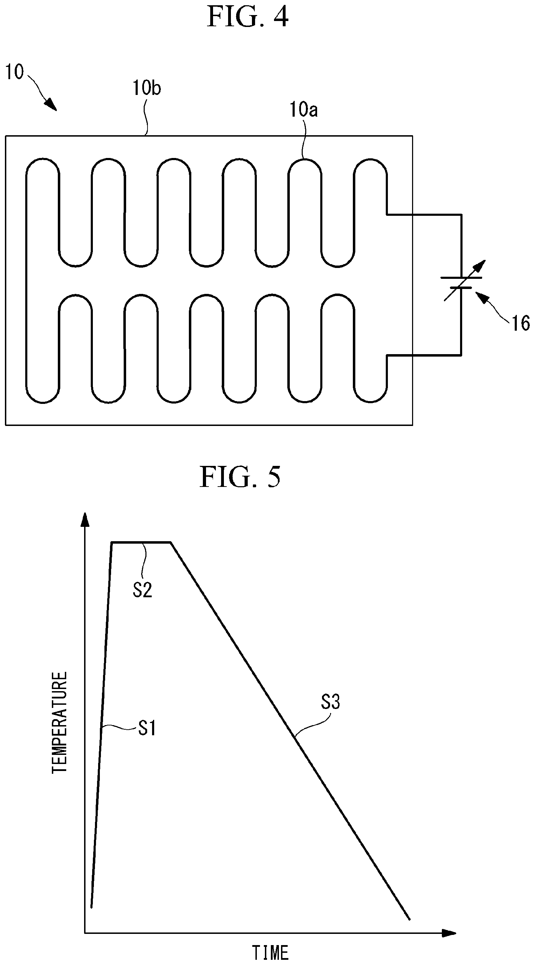

   Fig. 4 is a plan view schematically illustrating a graphite heater.
[Fig. 5]
   Fig. 5 is a graph illustrating a temperature history in a molding step.
[Fig. 6]

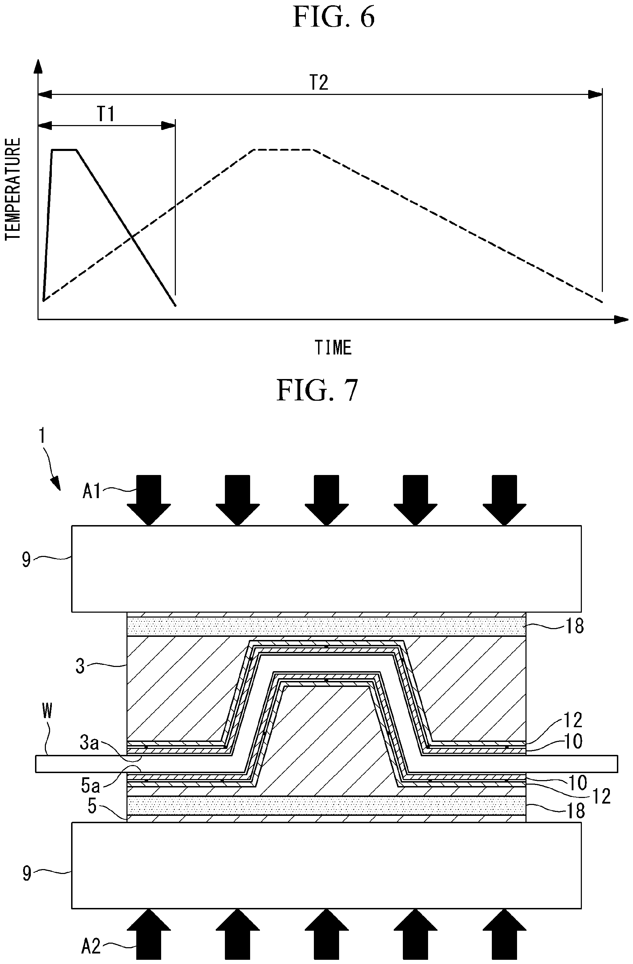

   Fig. 6 is a graph illustrating comparison of the cycle time between the present embodiment and a reference example.
[Fig. 7]
   Fig. 7 is a longitudinal sectional view illustrating a modified example of Fig. 1.

### [Description of Embodiments]

One embodiment according to the present disclosure will be described below with reference to the drawings.

Fig. 1 schematically illustrates a main part of a composite material molding apparatus 1 of a composite material member W according to the present embodiment. The composite material molding apparatus 1 is used to manufacture a molding of the composite material member W having a desired shape.

The composite material member W is formed of a composite material including a resin and fibers such as carbon fibers. The composite material member W can be used as a structure member of an aircraft, a ship, a vehicle, or the like, for example. Note that the composite material member W described in the present embodiment is in a state before cured.

As the composite material member W, a thermoplastic resin is preferably used. However, a thermosetting resin may be used. A composite material used for the composite material member W may be carbon fiber reinforced plastic (CFRP), glass fiber reinforced plastic (GFRP), aramid fiber reinforced plastic (AFRP), or the like, for example.

The composite material molding apparatus 1 includes an upper die (metal mold) 3 and a lower die (metal mold) 5. The upper die 3 and the lower die 5 are made of a metal. The upper die 3 is fixed to an upper plate 7 and forced in the arrow A1 direction by using a drive apparatus (not illustrated). The lower die 5 is fixed to a lower plate 9 and forced in the arrow A2 direction by using a drive apparatus (not illustrated). Note that the position of only the upper plate 7 may be changed with the lower plate 9 being fixed.

Molding surfaces 3a and 5a are formed on the lower surface of the upper die 3 and the upper surface of the lower die 5, respectively. A cavity is formed by the molding surface 3a of the upper die 3 and the molding surface 5a of the lower die. When the composite material member W is installed in the cavity and then pressurized and heated, the composite material member W is shaped to have a shape corresponding to the molding surfaces 3a and 5a.

The composite material member W is shaped into a hat shape in transverse sectional view as illustrated in Fig. 1. Therefore, the molding surfaces 3a and 5a each have a shape having a plurality of bent parts so as to have a hat shape. Note that the shape of the composite material member W is not limited to a hat shape in transverse sectional view, and other transverse sectional shapes such as an L-shape, a Z-shape, or the like may be employed.

The upper die 3 and the lower die 5 have graphite heaters (sheet heater) 10 and insulation sheets 12 near the molding surface 3a and 5a sides, respectively. Specifically, as illustrated in Fig. 2 as the enlarged part II of Fig. 1, front surface layers 3b, 5b forming the molding surfaces 3a, 5a, the graphite heaters 10, and the insulation sheets 12 are arranged in the order from the molding surface 3a, 5a sides.

The front surface layers 3b, 5b are made of the same metal as a metal mold base material. The graphite heaters 10 are installed on the back surface sides of the front surface layers 3b, 5b.

Each graphite heater 10 has a planar shape and is provided along the installation positions so as to have a constant distance from the molding surface 3a, 5a in a manner corresponding to the shape of the molding surface 3a, 5a. That is, the shape of the graphite heater 10 in transverse sectional view as illustrated in Fig. 1 has a similar shape to the molding surface 3a, 5a. The distance between the molding surface 3a, 5a and the graphite heater 10 is greater than or equal to 2 mm and less than or equal to 10 mm, for example. The thickness of the graphite heater 10 is greater than or equal to 0.2 mm and less than or equal to 0.5 mm, for example.

As illustrated in Fig. 3, the graphite heater 10 has an integrated structure in which the front surface and the back surface of a heat generating portion 10a made of graphite are interposed by an insulating layers 10b.

The heat generating portion 10a is made of graphite. Graphite can be obtained by baking a polyimide film, for example. With the use of graphite for the heat generating portion 10a, a short heating time and a high reaching temperature can be realized. For example, 1300 degrees Celsius can be reached within a heating time of about 0.2 seconds.

The insulating layer 10b is formed of a member having an electrical insulating property, and a resin having heat resistance, preferably, a polyimide film is used, for example.

Fig. 4 schematically illustrates the planar graphite heater 10. The insulating layer 10b is rectangular. The heat generating portion 10a is arranged so that a single linear portion meanders and folds back so as to be provided over the whole surface of the rectangular insulating layer 10b. Both ends of the heat generating portion 10a are connected to a DC power source 16 that supplies variable current and/or voltage.

The current and voltage of the DC power source 16 are controlled by a control unit (not illustrated). The control unit is formed of a central processing unit (CPU), a random access memory (RAM), a read only memory (ROM), a computer readable storage medium, and the like, for example. Further, a process of a series of operations for implementing respective functions is, as one example, stored in the storage medium or the like in a form of a program, and the CPU loads such a program into the RAM or the like and performs information processing and computing process, and thereby various functions are implemented. Note that a form in which a program is installed in advance in the ROM or other storage media, a form in which a program is provided in a state of being stored in a computer readable storage medium, a form in which a program is delivered via a wired or wireless communication unit, or the like may be applied. The computer readable storage medium is a magnetic disk, a magneto optical disk, CD-ROM, DVD-ROM, a semiconductor memory, or the like.

The insulation sheet 12 illustrated in Fig. 1 and Fig. 2 has a planar shape and is arranged on the back surface side along the shape of the graphite heater 10. The material of the insulation sheet 12 is a graphite sheet. As illustrated in the arrows of Fig. 2, when the insulation sheet 12 is provided on the back surface side of the graphite heater 10, heat generation of the graphite heater 10 can be concentrated on the front surface side (molding surface 3a, 5a side). Note that the insulation sheet 12 may be omitted.

As illustrated in Fig. 1, temperature sensors 14 are provided between the graphite heater 10 and the insulation sheet 12. The temperature sensors 14 are provided at a plurality of positions in the upper die 3 and the lower die 5. Output of the temperature sensor 14 is transmitted to the control unit. The control unit controls the current and/or voltage of the DC power source 16 based on the output of each position of the temperature sensors 14.

Fig. 5 illustrates an example of a temperature history of one cycle in which the composite material member W is installed and shaped in the composite material molding apparatus 1.

First, the composite material member W is installed between the upper die 3 and the lower die 5 (installation step) .

Further, in step S1, the composite material member W is pressurized while interposed between molding surfaces 3a and 5a. At the same time, the composite material member W is heated up to a predetermined temperature in a short time (pressurizing and heating step). As a heating temperature, a melting point of a thermoplastic resin used for the composite material member W is used, which may be, for example, about 400 degrees Celsius.

Next, in step S2, the temperature is maintained at a predetermined temperature while the current and/or voltage is adjusted by the control unit. During the step S2, the composite material member W is shaped.

Further, in step S3, the composite material member W is cooled. The cooling is performed by reducing current and/or voltage by the control unit and dissipating the heat from the upper die 3 and the lower die 5 to the outside.

Effects and advantages of the present embodiment described above are as follows.

The planar graphite heaters 10 are provided along installation positions so as to have a constant distance from the molding surfaces 3a and 5a in a manner corresponding to respective shapes of the molding surfaces 3a and 5a of the upper die 3 and the lower die 5. Accordingly, respective positions of the molding surfaces 3a and 5a can be evenly heated, and this can shorten the cycle time in which shaping of a composite material member W is performed.

For example, as illustrated in Fig. 6, in heating using a heat medium as described with PTL 1, since a heating-up time and a cooling-down time are long as illustrated by the dashed line, cycle time T2 is longer than cycle time T1 of the present embodiment. In the present embodiment, since the planar graphite heater 10 is used, the heating-up time can be remarkably reduced, and the cycle time T1 can be significantly shortened.

The planar insulation sheet 12 is provided on the back side of the graphite heater 10. Accordingly, heat generated by the graphite heater 10 can be effectively guided to the molding surface 3a, 5a sides, and this can further shorten the cycle time.

Note that the present embodiment can be modified as illustrated in Fig. 7. Specifically, cooling portions 18 are provided in the upper die 3 and the lower die 5, respectively. The cooling portion 18 may be, for example, a cooling channel through which a cooling medium such as cooling water or the like flows. The cooling portion 18 is provided on the back side of the insulation sheet 12. The cooling amount (flow rate or a temperature of a cooling medium, for example) of the cooling portion 18 is adjusted by the control unit. The heating amount transferred from the molding surfaces 3a, 5a to the composite material member W and the heat dissipation amount of the upper die 3 and the lower die 5 can be controlled by using the cooling portion 18.

Further, although the graphite heater 10 is used in the present embodiment, a planar electric heater such as a stainless sheet heater may be used instead of the graphite heater 10.

Further, in the embodiments illustrated in Fig. 1 and Fig. 7, both ends of the composite material member W protrude from the upper die 3 and the lower die 5 to the side part. Both the ends of the composite material member W can be used as a gripping margin in shaping. While gripping these gripping margins by a jig (not illustrated), it is possible to apply tension to the composite material member W in the horizontal direction (in-plane direction) in shaping. Note that the gripping margins of both the ends of the composite material member W are not essential, and the composite material member W may be installed so that both the ends do not protrude from the upper die 3 and the lower die 5.

The composite material molding apparatus and the composite material molding method described in the above embodiments are understood as follows, for example.

A composite material molding apparatus (1) according to one aspect of the present disclosure includes a metal mold (3, 5) having a molding surface (3a, 5a) configured to accommodate a composite material member (W) and shape the composite material member, and the metal mold has a planar sheet heater (10) provided along installation positions so as to have a constant distance from the molding surface in a manner corresponding to a shape of the molding surface.

A planar sheet heater is provided to a metal mold along installation positions so as to have a constant distance from the molding surface in a manner corresponding to the shape of the molding surface of the metal mold. Accordingly, respective positions of the molding surfaces can be evenly heated, and this can shorten the cycle time in which shaping of the composite material member is performed.

Further, in the composite material molding apparatus according to one aspect of the present disclosure, the metal mold has a planar insulation sheet (12) on the back side of the sheet heater when viewed from the molding surface.

A planar insulation sheet is provided on the back side of the sheet heater. Accordingly, heat generated by the sheet heater can be effectively guided to the molding surface side, and this can further shorten the cycle time.

Further, in the composite material molding apparatus according to one aspect of the present disclosure, a cooling portion (18) configured to cool the metal mold is provided on the back side of the insulation sheet when viewed from the molding surface.

The metal mold is cooled by providing the cooling portion on the back side of the insulation sheet. This makes it possible to control the heating amount transferred from the molding surface to the composite material member and the heat dissipation amount of the metal mold.

Further, the composite material molding apparatus according to one aspect of the present disclosure includes a control unit configured to control current and/or voltage supplied to the sheet heater.

The control unit configured to control the current and/or voltage supplied to the sheet heater can control heating and heat dissipation of the composite material member installed in the metal mold.

Further, in the composite material molding apparatus according to one aspect of the present disclosure, the sheet heater includes a heat generating portion (10a) made of graphite and an insulating layer (10b) that interposes and fixes the heat generating portion.

The sheet heater is a graphite heater. That is, the sheet heater is structured to include the heat generating portion made of a graphite and the insulating layer that interposes and fixes the heat generating portion. Because the heat generating portion is made of graphite, a short heating time and a high reaching temperature can be realized. For example, the heat generating portion made of graphite can reach 1300 degrees Celsius within a heating time of about 0.2 seconds.

A composite material molding method according to one aspect of the present disclosure is a composite material molding method using a composite material molding apparatus including a metal mold having a molding surface configured to accommodate a composite material member and shape the composite material member, and the metal mold has a planar sheet heater provided along installation positions so as to have a constant distance from the molding surface in a manner corresponding to a shape of the molding surface. The composite material molding method includes: an installation step for installing the composite material member to be in contact with the molding surface; and a pressurizing and heating step for pressurizing the composite material member by the metal mold and heating the composite material member by the sheet heater.

### [Reference Signs List]

- 1: composite material molding apparatus
- 3: upper die (metal mold)
- 3a: molding surface
- 3b: front surface layer
- 5: lower die (metal mold)
- 5a: molding surface
- 5b: front surface layer
- 7: upper plate
- 9: lower plate
- 10: graphite heater (sheet heater)
- 10a: heat generating portion
- 10b: insulating layer
- 12: insulation sheet
- 14: temperature sensor
- 16: DC power source
- 18: cooling portion
- W: composite material member

## Claims

1. A composite material molding apparatus comprising:
a metal mold having a molding surface configured to accommodate a composite material member and shape the composite material member,
wherein the metal mold has a planar sheet heater provided along installation positions so as to have a constant distance from the molding surface in a manner corresponding to a shape of the molding surface.

2. The composite material molding apparatus according to claim 1, wherein the metal mold has a planar insulation sheet on the back side of the sheet heater when viewed from the molding surface.

3. The composite material molding apparatus according to claim 2, wherein a cooling portion configured to cool the metal mold is provided on the back side of the insulation sheet when viewed from the molding surface.

4. The composite material molding apparatus according to any one of claims 1 to 3 further comprising a control unit configured to control current and/or voltage supplied to the sheet heater.

5. The composite material molding apparatus according to any one of claims 1 to 4, wherein the sheet heater comprises a heat generating portion made of graphite and an insulating layer that interposes and fixes the heat generating portion.

6. A composite material molding method performed by using a composite material molding apparatus including a metal mold having a molding surface configured to accommodate a composite material member and shape the composite material member,
wherein the metal mold has a planar sheet heater provided along installation positions so as to have a constant distance from the molding surface in a manner corresponding to a shape of the molding surface, and the composite material molding method comprising:
installing the composite material member so as to be in contact with the molding surface; and
pressurizing the composite material member by the metal mold and heating the composite material member by the sheet heater.
